# EUROPÄISCHE PATENTSCHRIFT

(11) **EP 3 956 741 B1**
(45) Veröffentlichungstag und Bekanntmachung des Hinweises auf die Patenterteilung: **26.04.2023**
(21) Anmeldenummer: 20716745.3
(22) Anmeldetag: 31.03.2020
(51) Int. Cl.: G05G 1/00, G06F 3/044, G05G 1/08, G06F 3/0362, G06F 3/039

(54) **EINGABEVORRICHTUNG MIT BEWEGLICHER HANDHABE AUF KAPAZITIVER DETEKTIONSFLÄCHE UND KAPAZITIVEN KOPPELEINRICHTUNGEN**
INPUT DEVICE WITH MOVABLE HANDLE ON A CAPACITIVE DETECTION SURFACE AND CAPACITIVE COUPLING DEVICES
DISPOSITIF D'ENTRÉE DOTÉ D'UNE MANETTE MOBILE SUR UNE SURFACE DE DÉTECTION CAPACITIVE ET SYSTÈMES DE COUPLAGE CAPACITIF

(30) Priorität: 12.06.2019 DE 102019115946
(43) Veröffentlichungstag der Anmeldung: 23.02.2022
(73) Patentinhaber: PREH GmbH, 97616 Bad Neustadt a.d. Saale (DE)
(72) Erfinder: KLEFFEL, Thomas, 97204 Höchberg (DE); BAUER, Norbert, 97616 Bad Neustadt (DE)
(74) Vertreter: Lohmanns, Bernard
(86) Internationale Anmeldenummer: PCT/EP2020/059086
(87) Internationale Veröffentlichungsnummer: WO 2020/249285

(56) Entgegenhaltungen:
- EP-A2- 2 511 807
- DE-A1-102017 121 896
- US-A- 5 936 613
- US-A1- 2014 042 004
- US-A1- 2016 224 129

## Beschreibung

Die Erfindung betrifft eine Eingabevorrichtung, welche eine kapazitive Detektionseinrichtung aufweist, wobei die Detektionseinrichtung eine Detektionsfläche unter Ausbildung eines der Detektionsfläche zugeordneten ersten Arrays von Arrayelektroden aufweist. Beispielsweise ist dieses erste Array aus zwei Gruppen von Elektroden ausgebildet, die gruppenweise im Wesentlichen parallel zueinander und dabei eine Gruppenausrichtung vorgebend angeordnet sind und die sich von Gruppe zu Gruppe bei senkrechter gedachter Projektion auf eine gemeinsame Ebene mehrfach durchkreuzend, beispielsweise orthogonal durchkreuzend, und alternierend und dabei elektrisch isoliert zueinander angeordnet sind. So wird eine regelmäßige Gitterstruktur unter Ausbildung eines sogenannten Knotenpunktes an den Orten der Kreuzung ausgebildet. Der kleinste Abstand nächstbenachbarter Knotenpunkte beschreibt die kleinste Periodizität der Gitterstruktur. Üblicherweise ist der kleinste Abstand nächstbenachbarter Knotenpunkte in den beiden durch die Gruppenausrichtung vorgegebenen Richtungen übereinstimmend. Beispielsweise handelt es sich bei der Detektionseinrichtung um einen kapazitiven Touchscreen oder ein kapazitives Touchpad. Bei diesen gattungsgemäßen Eingabevorrichtungen ist ferner eine elektrisch mit den Arrayelektroden verbundene, elektronische Auswerteinheit vorgesehen, um mittels des ersten Arrays von Arrayelektroden ein zugehöriges elektrisches Messfeldarray zur ortsauflösenden Detektion einer kapazitiven Beeinflussung auf der Detektionsfläche auszubilden. Die einzelnen Messfelder des Messfeldarrays werden üblicherweise durch entsprechende Ansteuerung in zeitlicher Abfolge erzeugt.

Auf der durch die Detektionseinrichtung definierten Detektionsfläche ist nunmehr ferner eine Handhabe beweglich angeordnet, deren Stellung mittels der Detektionseinrichtung detektiert werden soll. Dazu weist die Handhabe einen mitbewegten Stellungsgeber auf, um eine durch die Detektionseinrichtung detektierbare Beeinflussung wenigstens einer der Messfelder zu bewirken, woraus eine Stellungs- und/oder Bewegungsinformation ableitbar ist. Eine derartige, aus Kombination eines Touchpads oder Touchscreens mit einer darauf beweglich angeordneten Handhabe gebildeten Eingabevorrichtung wird zunehmend beliebter, da dadurch flexible Eingabemöglichkeiten geschaffen werden und insbesondere bei einem Touchscreen aufgrund der flexiblen Anzeigemöglichkeiten der Handhabe vielfältige Funktionen und Funktionshinweise zugeordnet werden können. Andererseits stellt aber die Handhabe ein gewohntes haptisches Feedback bereit und kann leicht vom Benutzer ohne Sichtkontakt ertastet werden. Aufgrund der gewünschten Nutzung des unter der Handhabe befindlichen und von der Handhabe überdeckten Bereichs der kapazitiven Elektrodenstruktur zur Stellungsdetektion ist eine kapazitive Kopplung zwischen der Handhabe, insbesondere dem dort vorgesehenen Stellungsgeber und dem ersten Array aus Arrayelektroden erforderlich. Das Problem der kapazitiven Kopplung, das sich hier regelmäßig stellt, ergibt sich daraus, dass die Bahn, die der Stellungsgeber bei der händischen Bewegung der Handhabe entlang des Stellweges überschreibt, nie vollständig mit der Struktur, die von dem ersten Array aus Arrayelektroden vorgegeben wird, zur Deckung gebracht werden kann und somit die Stellungsdetektion zumindest für einige Stellungen der Handhabe unzuverlässig und störanfällig ist.

EP 2511807 A2 offenbart eine Bedieneinrichtung für ein Elektrogerät mit kapazitivem Touchscreen. Am Touchscreen ist als Halteeinrichtung ein Magnet für ein bewegbares Bedienelement angeordnet. Das Bedienelement ist so ausgebildet, dass eine Signalübertragung vom Bedienelement kapazitiv erfolgt.

Weitere Beispiele sind US 2016/224129 A1, US 2014/042004 A1 und US 5936613 A.

Vor diesem Hintergrund bestand Bedarf nach einer gattungsgemäßen Eingabevorrichtung, bei der eine für alle Stellungen der Handhabe verbesserte weil gleichmäßigere kapazitive Kopplung und damit verbesserte Stellungsdetektion erreicht wird und insbesondere die kapazitive Kopplung zwischen der kapazitiven Detektionseinrichtung, beispielsweise dem kapazitiven Touchscreen, und dem Stellungsgeber der Handhabe verbessert wird. Diese Aufgabe wird durch eine Eingabevorrichtung gemäß Anspruch 1 gelöst. Eine gleichermaßen vorteilhafte Verwendung ist Gegenstand des nebengeordneten Anspruchs 7.

Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft eine Eingabevorrichtung, welche eine kapazitive Detektionseinrichtung beinhaltet und dabei die Detektionseinrichtung eine Detektionsfläche unter Ausbildung eines der Detektionsfläche zugeordneten ersten Arrays von Arrayelektroden aufweist. Die Arrayelektroden sind beispielsweise in einer gemeinsamen Ebene oder auf zwei oder mehr parallelen Ebenen angeordnet. Dieses erste Array ist aus zwei Gruppen von Arrayelektroden ausgebildet. Die Arrayelektroden sind gruppenweise im Wesentlichen parallel zueinander angeordnet, wodurch pro Gruppe eine Gruppenausrichtung vorgegeben ist. Die Arrayelektroden sind gruppenweise, d.h. bezüglich ihrer Gruppenzugehörigkeit alternierend angeordnet. Bei senkrechter gedachter Projektion auf eine gemeinsame Ebene durchkreuzen sie sich untereinander, beispielsweise orthogonal, wobei sie aber eigentlich elektrisch isoliert zueinander angeordnet sind. Dadurch wird insgesamt betrachtet in einem bezogen auf die gesamte Detektionsfläche flächenmäßig größten Teilbereich der Detektionsfläche eine regelmäßige Gitterstruktur unter Ausbildung eines sogenannten Knotenpunktes an den Orten der Kreuzung ausgebildet, welche auch regelkonforme Auslegung der Gitterstruktur und damit des ersten Arrays verstanden wird. Der kleinste Abstand nächstbenachbarter Knotenpunkte in den beiden durch die Gruppenausrichtung definierten Richtungen beschreibt die kleinste Periodizität der Gitterstruktur. Üblicherweise ist der kleinste Abstand der Knotenpunkte in den beiden durch die Gruppenausrichtung vorgegebenen Richtungen übereinstimmend.

Die Bezeichnung Elektrode soll die Ausbildung der betreffenden Arrayelektrode aus leitfähigem Material, beispielsweise aus Metall oder einer metallischen Legierung implizieren. Beispielweise handelt es sich um eine kapazitive Detektionseinrichtung in projiziert-kapazitiver Technologie, insbesondere um eine solche im mutual-capacitance Aufbau. Bei dem mutual-capacitance Aufbau werden Messfelder, wie zuvor beschrieben an den Knotenpunkten jeweils zwischen zwei elektrisch isolierten, sich kreuzenden Arrayelektroden erzeugt. Die Knotenpunkte sind bei handelsüblichen Touchpads oder Touchscreens in einem rechtwinkligen Gitter angeordnet.

Erfindungsgemäß ist ferner eine elektrisch mit den Arrayelektroden verbundene, bevorzugt elektrisch leitend verbundene, elektronische Auswerteinheit vorgesehen, um mittels des erstes Arrays von Arrayelektroden ein zugehöriges, bevorzugt in zeitlicher Abfolge erzeugtes und zeitlich variierendes, Array von elektrischen Messfeldern, im Folgenden als Messfeldarray bezeichnet, zur ortsauflösenden Detektion einer kapazitiven Beeinflussung auf der Detektionsfläche auszubilden. Generell ist die Lage der durch die Arrayelektroden zu erzeugenden Messfelder jeweils durch die Position der Knotenpunkte definiert. Die Auswerteinheit ist in der Lage, die Beeinflussung der kapazitiv erzeugten Messfelder zu messen. Wenn das jeweilige Messfeld durch eine äußere Annäherung eines Objekts beeinflusst wird, wird die durch die Auswerteinheit gemessene elektrische Beeinflussung, beispielsweise am betreffenden Knotenpunkt, verändert und detektiert und kann aufgrund der Arrayelektrodenstruktur, die bevorzugt nach Reihen und Spalten gegliedert ist, einem Ort auf der Detektionsfläche zugeordnet werden.

Die Eingabevorrichtung weist erfindungsgemäß eine Handhabe auf, die beweglich entlang eines zur Detektionsfläche parallelen Stellwegs auf der Detektionsfläche mittels Lagermittel angeordnet ist, und gemäß der Erfindung über die Lagermittel befestigt ist, um eine Bedieneingabe bei Bewegung, insbesondere unter Berührung der Handhabe durch einen Bediener, vorzunehmen. Beispielsweise handelt es sich um eine entlang eines linearen Stellwegs in einer zur Detektionsfläche parallelen Richtung translatorisch bewegbar gelagerte Handhabe. Bevorzugt ist die Handhabe um eine zur Detektionsfläche orthogonale Drehachse drehbeweglich an der Detektionsfläche gelagert und qualifiziert die Handhabe der Eingabevorrichtung damit als einen Drehsteller.

Erfindungsgemäß ist ferner ein mit der Handhabe mitbewegter und damit ein sich mit der Handhabe synchron bewegender Stellungsgeber vorgesehen, wobei der Stellungsgeber bei der händischen Verstellung der handhabe entlang des Stellwegs wenigstens eine Bahn über die Detektionsfläche beschreibt. Der Stellungsgeber ist vorgesehen, stellungsabhängig wenigstens ein Messfeld des Messfeldarrays kapazitiv zu beeinflussen, da er beispielsweise mit einem elektrischen Potenzial beaufschlagt ist. Es handelt sich dabei beispielsweise um einen elektrischen Leiter, der beispielsweise als Federzunge ausgebildet ist. Der Stellungsgeber ist beispielsweise gegenüber der Auswerteinheit elektrisch isoliert ausgebildet. Er kann ein oder mehrteilig ausgebildet sein, wobei die mehreren Teile bevorzugt elektrisch leitend verbunden sind. In einer Ausgestaltung ist der Stellungsgeber mit der dem Bediener zugewandten Oberfläche der Handhabe elektrisch leitend verbunden, um bei Berührung durch den Bediener auf dessen elektrisches Potenzial ge- oder entladen zu werden.

Erfindungsgemäß ist bei zur Detektionsfläche senkrechter Projektion der Bahn auf die die Gitterstruktur beinhaltende Ebene ein außerhalb des größten Teilbereichs liegender, die Projektion der Bahn wenigstens teilweise beinhaltender kleinerer Teilbereich der Gitterstruktur derart von der regelmäßigen Gitterstruktur abweichend ausgebildet, dass, mehrere innerhalb des Teilbereichs liegenden Knotenpunkte jeweils gegenüber ihrer gedachten, regelkonformen Position so versetzt angeordnet sind, dass der Abstand zur Projektion der Bahn für den jeweiligen Knotenpunkt gegenüber dem der regelkonformen Position zumindest minimiert ist. Anders ausgedrückt von der überwiegend regelmäßigen Giiterstruktur wird lokal durch nicht-regelkonforme Ausbildung, auch Deformation genannt, mit dem Ziel abgewichen, dass mehrere, bevorzugt eine Mehrzahl der Knotenpunkte, meist bevorzugt alle Knotenpunkte, im nicht-regelkonformen Teilbereich gegenüber ihrer durch regelkonforme Auslegung vorgegebenen Position in Richtung der Projektion der Bahn des Stellungsgebers versetzt positioniert sind oder gar in der projizierten Fläche der Bahn beinhaltet sind.

Gemäß einer bevorzugten Ausgestaltung ist somit vorgesehen, dass bei zur Detektionsfläche senkrechter Projektion der Bahn auf die Ebene der Gitterstruktur mehrere, bevorzugt die Mehrzahl, noch bevorzugter alle, innerhalb des Teilbereichs liegenden Knotenpunkte auf der Bahn des Stellungsgebers angeordnet sind. Noch bevorzugter sind dabei die innerhalb des Teilbereichs liegenden Knotenpunkte gleichmäßig beabstandet zueinander über den durch den Stellweg vorgegebenen Verlauf der Bahn verteilt angeordnet.

Gemäß einer bevorzugten Ausgestaltung ist zur stellungsabhängigen kapazitiven Kopplung zwischen Stellungsgeber und dem ersten Array von Arrayelektroden eine auf der Detektionsfläche ruhend angeordnete, beispielsweise an der Detektionsfläche festgelegte Koppeleinrichtung vorgesehen. Diese kann ein- oder mehrteilig ausgebildet sein. Diese weist eine der Detektionsfläche zugewandte, erste Fläche auf, auf der ein zweites Array von Koppelelektrode zur kapazitiven Kopplung mit den Arrayelektroden ausgebildet ist. Die Koppeleinrichtung weist ferner eine dem Stellungsgeber zugewandte und der Detektionsfläche abgewandte, zweite Fläche auf, auf der ein drittes Array aus mehreren, beabstandet zueinander angeordneten Kontaktflächen ausgebildet ist. Diese Kontaktflächen sind so angeordnet, dass sie selektiv und abhängig von der Stellung der Handhabe entlang des Stellweges von dem Stellungsgeber berührkontaktiert werden. Ferner beinhaltet die Koppeleinrichtung mehrere elektrisch leitende Verbindungen, deren Anzahl mindestens der Anzahl der Kontaktflächen entspricht. Die elektrisch leitenden Verbindungen sind ausgebildet, jeweils eine der Koppelelektroden elektrisch leitend mit einer Kontaktfläche zu verbinden. Die Kontaktflächen, Koppelelektroden sowie die elektrisch leitenden Verbindungen sind aus elektrisch leitfähigem Material. Die Kontaktflächen, Koppelektroden und/oder die elektrisch leitenden Verbindungen sind beispielsweise als leitfähige Beschichtungen eines Substrats ausgebildet. In einer Ausgestaltung werden jeweils die elektrisch leitende Verbindung, die zugehörige Kontaktfläche sowie die zugehörige Koppelelektrode einstückig ausgebildet, beispielsweise als säulenförmiger Leiter.

Somit ist die elektronische Auswerteinheit ausgebildet, die Beeinflussung des Messfeldes aufgrund wenigstens einer kapazitiven Kopplung zu detektieren, wobei die dabei selektierte Kontaktfläche von der Stellung des Stellungsgebers bestimmt ist und sich die kapazitive Kopplung jeweils zwischen der stellungsabhängig durch den Stellungsgeber über die Kontaktfläche und die jeweilige elektrische Verbindung kontaktierte Koppelelektrode und dem benachbart angeordneten und zugehörigen Messfeld des Messfeldarrays ergibt, welches durch das erste Array von Arrayelektroden erzeugt wird. Wie zuvor erläutert, ist es beispielsweise möglich, dass aufgrund mehrfacher kapazitiver Kopplung es in einer oder mehreren Stellungen des Stellungsgebers zu einer Beeinflussung mehrerer Messfelder unterschiedlicher Arrayelektroden kommt, da gemäß einer Ausgestaltung die Kontaktfläche mit mehreren Koppelelektroden über jeweils eine Verbindung elektrisch leitend verbunden ist, oder der Stellungsgeber parallel in einer Stellung mehrere Kontaktflächen kontaktiert oder mehrere Stellungsgeber vorgesehen sind. Die Auswerteinheit ist in der Lage die zuvor erläuterte stellungsabhängige Beeinflussung der Messfelder zu detektieren, um eine Stellungsinformation und/oder Bewegungsinformation der Handhabe zu erhalten und auszugeben. Anders ausgedrückt, die Auswerteinheit ist in der Lage, anhand der von der Stellung der Handhabe abhängigen und durch den Stellungsgeber bewirkten Beeinflussung der betreffenden Messfelder die jeweilige Stellung zu identifizieren und somit der Beeinflussung eine Stellungsinformation zuzuordnen und diese beispielsweise zur Vornahme einer Steuer- oder Schaltfunktion an eine übergeordnete Steuereinrichtung auszugeben.

Bevorzugt ist eine Rasteinrichtung zur Erzeugung einer Rasthaptik und Vorgabe vorgegebener Stellungen entlang des Stellwegs der Handhabe vorgesehen. Beispielsweise weist die Rasteinrichtung eine Rastnase und eine Rastkontur auf, wobei die Rastnase in Wirkeingriff mit der Rastkontur steht und gegen die Rastkontur vorgespannt ist und bei der Verstellung der Handhabe auf der Rastkontur abläuft, um jeweils nach Überwinden einer Rasterhebung in eine Rastvertiefung einzugreifen, wobei letztere die vorgegebenen Stellungen definieren.

Gemäß einer Ausgestaltung ist der Stellungsgeber elektrisch leitend mit einer leitfähigen, für die Berührung durch einen Bediener ausgebildeten und angeordneten Oberfläche verbunden, dass er darüber mit Potenzial beaufschlagt werden kann. Bevorzugt ist jedoch vorgesehen, dass die Koppeleinrichtung derart ausgebildet ist, dass über die Koppeleinrichtung der Stellungsgeber kapazitiv mit einem elektrischen Feld wenigstens einer Arrayelektrode gekoppelt wird.

Bevorzugt weist die Koppeleinrichtung wenigstens eine Speiseelektrode auf ihrer ersten Fläche und wenigstens eine damit elektrisch leitende Speisekontaktfläche auf ihrer zweiten Seite auf, mittels derer der Stellungsgeber zumindest in den vorgegebenen Stellungen in Berührkontakt steht, um den Stellungsgeber mit dem elektrischen Feld wenigstens eine Arrayelektrode kapazitiv zu koppeln.

Die Erfindung betrifft ferner die Verwendung der Eingabevorrichtung in einer der zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Fig. 1: eine perspektivische Aufsicht einer erfindungsgemäßen Eingabevorrichtung 1;
- Fig. 2: eine Schnittansicht der zur erfindungsgemäßen Eingabevorrichtung gehörigen Koppeleinrichtung 5 in einer beispielhaften Ausführungsform;
- Fig. 3: eine Aufsicht auf die dem Stellungsgeber 5 zugewandte, zweite Seite der zur erfindungsgemäßen Eingabevorrichtung gehörigen Koppeleinrichtung 5 in einer beispielhaften Ausführungsform;

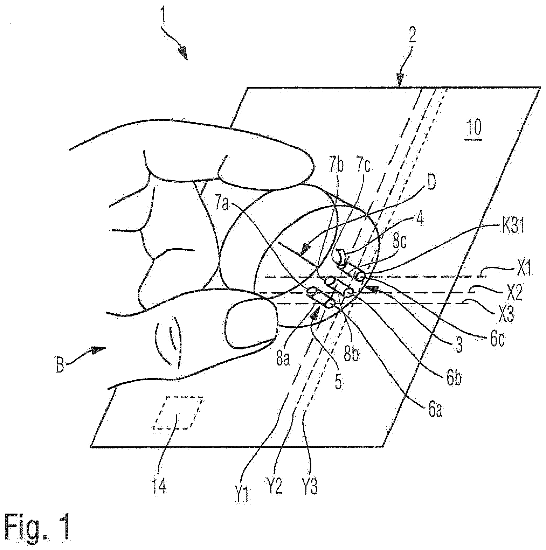

Figur 1 zeigt eine erfindungsgemäße Eingabevorrichtung 1 mit einem als kapazitive Detektionseinrichtung 2 fungierenden Touchscreen. Die Detektionseinrichtung 2 definiert eine dem Bediener B zugewandte Detektionsfläche 10, auf der eine Handhabe 3 um eine Drehachse D drehbeweglich mittels der in Figur 1 aus Gründen der besseren Anschauung nicht dargestellten Lagermittel gelagert angeordnet ist und somit einen sogenannten Drehsteller ausbildet. Die kapazitive Detektionseinrichtung 2 weist im Wesentlichen parallel verlaufende Arrayelektroden X1 bis X3 auf, sowie senkrecht dazu sich erstreckende Arrayelektroden Y1 bis Y3 als Gegenelektroden auf, wodurch ein erstes Array ausgebildet ist. Das erste Array aus Arrayelektroden X1 bis X3, Y1 bis Y3 ist in den Figuren nicht vollständig und nicht maßstabsgetreu eingezeichnet und soll nur der schematischen Deutlichmachung des prinzipiellen Aufbaus dienen. Die Kreuzungspunkte der Arrayelektroden X1 bis X3 mit den Arrayelektroden Y1 bis Y3 bilden jeweils einen imaginären Knotenpunkt aus, der jeweils Ausgangspunkt eines kapazitiven Messfeldes ist. Die sich ergebende Gitterstruktur ergibt sich als zur Detektionsfläche 10 senkrechte Projektion auf eine gemeinsame Ebene. In der Figur 1 ist aus Gründen der Übersichtlichkeit lediglich ein Kotenpunkt, nämlich K31 näher bezeichnet. Die Nummerierung der weiteren Knotenpunkte ergibt sich analog dazu.

Mit den Arrayelektroden X1 bis X3 und Y1 bis Y3 ist eine elektronische Auswerteinheit 14 elektrisch verbunden, die einige Arrayelektroden, beispielsweise die Elektroden X1 bis X3 selektiv und in zeitlicher Abfolge zur Erzeugung eines zugehörigen Messfeldes mit jeweils einem zugehörigen Potenzial beaufschlagt, um anhand der Beeinflussung dieser Messfelder eine Berührung durch den Bediener B oder je nach Lage der betreffenden Knotenpunkte bezüglich der Handhabe 3 eine Stellung der Handhabe 3 zu detektieren. Zur Beeinflussung der betreffenden Messfelder weist die Handhabe 3 auf ihrer der Detektionsfläche 10 zugewandten Seite einen Stellungsgeber 4 auf, der in der vorliegenden Ausführungsform gegenüber dem Bediener B während dessen Berührung der Handhabe 3 elektrisch isoliert angeordnet ist und statt mit dem Körperpotenzial des Bedieners B beaufschlagt zu sein, mit dem elektrischen Feld wenigstens einer der Arrayelektroden kapazitiv gekoppelt ist. Es sind mehrere, insbesondere sich gleichmäßig über den Stellweg der Handhabe 3 verteilende, vorgegebene Stellungen vorgesehen, von denen eine mögliche Stellung in der Figur 1 gezeigt ist. Diese Stellungen sind durch eine nicht dargestellte Rasteinrichtung vorgegeben.

Zur verbesserten, kapazitiven Kopplung zwischen dem Stellungsgeber 4 und je nach Stellung einem der an den Knotenpunkten K11 bis K33 befindlichen Messfeldern ist eine ruhend auf der Detektionsfläche 10 angeordnete Koppeleinrichtung 5 vorgesehen, die aber nicht zwingend vorgesehen sein muss. Diese weist eine der Detektionsfläche 10 zugewandte, erste Fläche und eine dem Stellungsgeber 4 zugewandte zweite Fläche auf. Die erste Fläche ist beispielsweise angrenzend an die Detektionsfläche angeordnet, bzw. daran festgelegt. Die erste Fläche trägt ein in Figur 1 nur ausschnittsweise gezeigtes, zweites Array von Koppelelektroden 6a, 6b, 6c, während die zweite Fläche ein in Figur 1 ebenfalls nur ausschnittsweise gezeigtes, drittes Array von Kontaktflächen 7a, 7b, 7c trägt. Die Platzierung der Koppelelektroden 6a, 6b, 6c des zweiten Arrays auf der ersten Seite ist im Wesentlichen deckungsgleich mit der Platzierung der Kontaktflächen 7a, 7b, 7c des dritten Arrays auf der zweiten Seite.

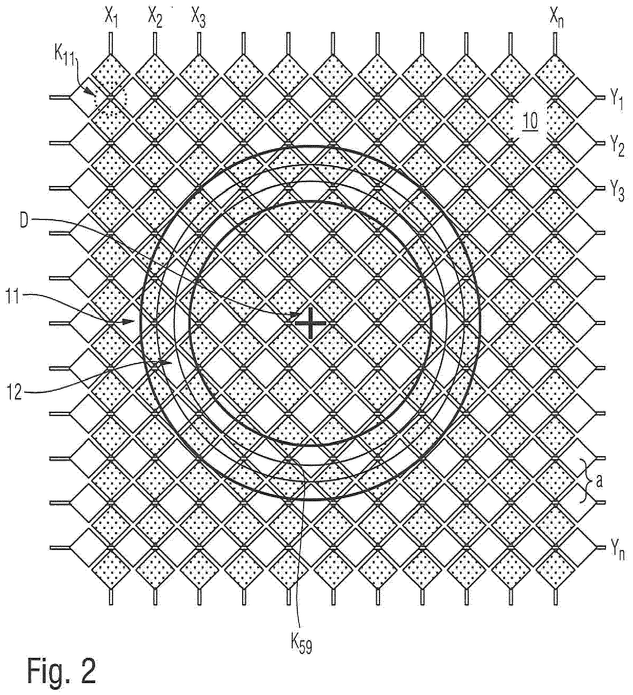

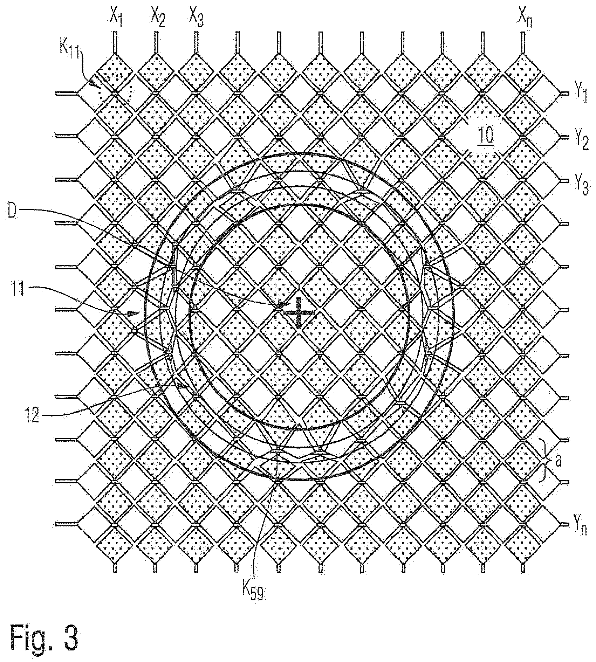

Anhand der Figur 2 wird das von den erfindungsgemäßen Ausführungsformen, wie eine schematisch in Figur 3 gezeigt ist, zu lösende Problem erläutert. Bei streng regelkonformer, d.h. über die gesamte Ebene der Gitterstruktur regelkonforme Ausbildung des ersten Arrays aus Arrayelektroden X1 bis Xn, Y1 bis Yn taucht das Problem auf, dass die senkrechte Projektion der Bahn 12 des in Figur 1 mit 4 bezeichneten Stellungsgebers auf die zuvor erwähnte Ebene der das erste Array beschreibenden Gitterstruktur nur wenige Knotenpunkte beinhaltet bzw. der Abstand der projizierten Bahn 12 zu einigen Knotenpunkten vergleichsweise groß ist. Die Bahn 12 beziehungsweise deren senkrechte Projektion, ergibt sich durch die Bewegung des Stellungsgebers 4 bei der Bewegung der Handhabe 3 entlang des Stellwegs und ist beispielsweise bei vorhandener Koppeleinrichtung 5 durch den Berührbereich zwischen der Koppeleinrichtung 5 und dem Stellungsgeber 4 definiert. Wie gezeigt, beinhaltet die Projektion der Bahn 12 nur einige Knotenpunkte und beispielsweise nicht den Knotenpunkt K59, was darauf zurückzuführen ist, dass diese projizierte Bahn 12 nicht mit der von der Gitterstruktur vorgegebenen, und damit regelkonformen Lage der Knotenpunkte K59 zur Deckung zu bringen ist.

Um dieses Problem zu lösen, wird bei der erfindungsgemäßen in Figur 3 gezeigten Auslegung in einem Teilbereich 11 der Detektionsfläche 10, die durch das erste Array von Arrayelektroden X1 bis Xn und Y1 bis Yn des Touchscreens definiert ist und dessen Fläche weniger als 50% der Gesamtfläche dieser Detektionsfläche 10 ausmacht, die Gitterstruktur abweichend von der Regelmäßigkeit ausgebildet, wie sie außerhalb des Teilbereichs 11 vorgegeben ist. Es gibt sich somit im Teilbereich 11 eine nicht regelkonforme Ausbildung, bei der der kleinste Abstand a zwischen nächstbenachbarten Knotenpunkten, wie er außerhalb des Teilbereichs 11 eingehalten wird, im Teilbereich 11 nicht mehr zwingend eingehalten wird. Die im Teilbereich 11 nunmehr vorliegende Deformation der Gitterstruktur hat zum Ziel, die Mehrheit bis alle der im Teilbereich 11 liegenden Knotenpunkte, wie den Knotenpunkt K59, gegenüber seiner regelkonformen Platzierung so zu versetzen, dass er bei senkrechter Projektion der Bahn 12 des Stellungsgebers 4 aus Figur 1 auf die Detektionsfläche 10 innerhalb der von dieser projizierten Bahn 12 beschriebenen Fläche angeordnet ist. Dadurch wird erreicht, dass der lichte Abstand zwischen dem Stellunggeber 4 und den für die Stellungsdetektion relevanten Knotenpunkten, wie dem Knotenpunkt K59, der je nach Ausführungsform mit oder ohne Koppeleinrichtung 5 zu überbrücken ist, gegenüber dem seiner gedachten regelkonformen Platzierung nicht nur minimiert ist, sondern dieser in der projizierten Fläche der Bahn 12 aufgenommen ist. Dadurch wird eine verbesserte kapazitive Kopplung mit den elektrischen Messfeldern erreicht, die ihren Ursprung an diesen Koppelpunkten, wie dem Koppelpunkt K59 haben. Insgesamt wird somit eine verbesserte Stellungsdetektion erreicht.

## Patentansprüche

1. Eingabevorrichtung (1) aufweisend:
eine kapazitive Detektionseinrichtung (2), welche eine Detektionsfläche (10) unter Ausbildung eines der Detektionsfläche (10) zugeordneten ersten Arrays von Arrayelektroden (X1 bis Xn, Y1 bis Yn), aufweist, wobei das erste Array aus zwei Gruppen (X, Y) von Arrayelektroden (X1 bis Xn, Y1 bis Yn) ausgebildet ist, die gruppenweise im Wesentlichen parallel zueinander, dabei jeweils eine Gruppenausrichtung vorgebend und bezüglich ihrer Gruppenzugehörigkeit alternierend angeordnet sind und bei senkrechter gedachter Projektion auf eine gemeinsame Ebene mehrfach durchkreuzend und dabei elektrisch isoliert zueinander unter Ausbildung jeweils eines Knotenpunktes (K31, K11, K59) an den Orten ihrer Kreuzung angeordnet sind, wobei in einem bezogen auf die Detektionsfläche (10) flächenmäßig größten Teilbereich der Detektionsfläche (10) eine regelmäßige Gitterstruktur mit regelkonformer Positionierung der Knotenpunkte (K11) ausgebildet wird, so dass jeweils der kleinste Abstand in Gruppenausrichtung nächstbenachbarter Knotenpunkte des größten Teilbereichs eine kleinste Periodizität der Gitterstruktur beschreibt;
eine elektrisch mit den Arrayelektroden (X1 bis Xn, Y1 bis Yn) verbundene, elektronische Auswerteinheit (14), um mittels des ersten Arrays von Arrayelektroden (X1 bis Xn, Y1 bis Yn) ein zugehöriges elektrisches Messfeldarray zur ortsauflösenden Detektion einer kapazitiven Beeinflussung auf der Detektionsfläche (10) auszubilden;
eine Handhabe (3), die auf der Detektionsfläche (10) entlang eines zur Detektionsfläche (10) parallelen Stellweges mittels Lagermittel beweglich befestigt ist, um eine Bedieneingabe mittels händisch bewirkter Bewegung entlang des Stellwegs, beispielsweise unter Berührung der Handhabe (3) durch einen Bediener (B), vorzunehmen;
wenigstens ein mit der Handhabe (3) mitbewegter Stellungsgeber (4), um stellungsabhängig wenigstens ein Messfeld des Messfeldarrays kapazitiv zu beeinflussen; wobei der Stellungsgeber (4) bei der händischen Verstellung der Handhabe entlang des Stellwegs wenigstens eine Bahn (12) über die Detektionsfläche (10) beschreibt;
und wobei die elektronische Auswerteinheit (14) ausgebildet ist, die mittels des Stellungsgebers (4) bewirkte stellungsabhängige Beeinflussung des Messfeldarrays zu detektieren, um eine Stellungsinformation und/oder Bewegungsinformation der Handhabe (3) zu erhalten und auszugeben,
**dadurch gekennzeichnet, dass**
bei zur Detektionsfläche (10) senkrechter Projektion der Bahn (12) auf die Ebene der Gitterstruktur ein außerhalb des größten Teilbereichs liegender, die Projektion der Bahn (12) beinhaltender, kleinerer Teilbereich (11) der Gitterstruktur derart durch nicht-regelkonforme Ausbildung von der regelmäßigen Gitterstruktur mit dem Ziel abweichend ausgebildet ist, dass mehrere, bevorzugt die Mehrzahl, meist bevorzugt alle, der innerhalb des nicht-regelkonformen Teilbereichs (11) liegenden Knotenpunkte (K59) gegenüber ihrer gedachten, durch eine regelkonforme Auslegung vorgegebenen Position in Richtung der Projektion der Bahn (12) des Stellungsgebers (4) versetzt angeordnet sind oder in einer projizierten Fläche der Bahn (12) beinhaltet sind.

2. Eingabevorrichtung (1) gemäß dem vorhergehenden Anspruch, wobei bei zur Detektionsfläche (10) senkrechter Projektion der Bahn (12) auf die Ebene der Gitterstruktur mehrere, bevorzugt alle, innerhalb des Teilbereichs (11) liegenden Knotenpunkte (K59) innerhalb der Projektion der Bahn (12) des Stellungsgebers (4) angeordnet sind.

3. Eingabevorrichtung (1) gemäß dem vorhergehenden Anspruch, wobei die innerhalb des Teilbereichs (11) liegenden Knotenpunkte (K59) gleichmäßig beabstandet zueinander über den durch den Stellweg vorgegebenen Verlauf der Projektion der Bahn (12) verteilt angeordnet sind.

4. Eingabevorrichtung (1) gemäß einem der vorhergehenden Ansprüche, wobei zur stellungsabhängigen kapazitiven Kopplung zwischen Stellungsgeber und dem ersten Array von Arrayelektroden (X1 bis Xn, Y1 bis Yn) eine auf der Detektionsfläche (10) ruhend angeordnete Koppeleinrichtung (5) mit einer der Detektionsfläche (10) zugewandten, ersten Fläche, auf der ein zweites Array von Koppelelektroden (6a, 6b, 6c) zur kapazitiven Kopplung mit den Arrayelektroden (X1 bis Xn, Y1 bis Yn) ausgebildet ist und mit einer dem Stellungsgeber (4) zugewandten und der Detektionsfläche (10) abgewandten, zweiten Fläche, auf der ein drittes Array aus mehreren, beabstandet zueinander angeordneten Kontaktflächen (7a, 7b, 7c) ausgebildet ist, wobei die Kontaktflächen so angeordnet sind, dass sie selektiv und abhängig von der Stellung der Handhabe (3) entlang des Stellweges von dem Stellungsgeber (4) berührkontaktiert werden; und die Koppeleinrichtung (5) mehrere elektrisch leitende Verbindungen (8a, 8b, 8c) beinhaltet, deren Anzahl mindestens der Anzahl der Kontaktflächen (7a, 7b, 7c) entspricht und die ausgebildet sind, jeweils eine der Koppelelektroden (6a, 6b, 6c) elektrisch leitend mit einer Kontaktfläche (7a, 7b, 7c) zu verbinden.

5. Eingabevorrichtung (1) gemäß einem der vorhergehenden Ansprüche, wobei eine Rasteinrichtung zur Erzeugung einer Rasthaptik und Vorgabe vorgegebener Stellungen entlang des Stellwegs der Handhabe (3) vorgesehen ist.

6. Eingabevorrichtung (1) gemäß einem der vorhergehenden Ansprüche, wobei die Koppeleinrichtung (5) ausgebildet ist, dass über die Koppeleinrichtung (5) der Stellungsgeber (4) mit wenigstens einer der Arrayelektroden des ersten Arrays gekoppelt ist.

7. Verwendung der Eingabevorrichtung (1) gemäß einem der vorhergehenden Ansprüche in einem Kraftfahrzeug.

## Claims

1. Input device (1) having:
a capacitive detection device (2), which has a detection surface (10) forming a first array of array electrodes (X1 to Xn, Y1 to Yn) assigned to the detection surface (10), wherein the first array is formed from two groups (X, Y) of array electrodes (X1 to Xn, Y1 to Yn) which are arranged substantially parallel to one another in groups, in each case defining a group alignment and being arranged alternately with respect to their group association and, in a vertical imaginary projection onto a common plane, cross one another repeatedly and, electrically insulated from one another, are arranged to form a respective junction (K31, K11, K59) at the locations at which they cross, wherein, in a subarea of the detection surface (10) that is largest in terms of area in relation to the detection surface (10), a regular grid structure with rule-compliant positioning of the junctions (K11) is formed, so that in each case the smallest spacing in the group alignment of the most closely adjacent junctions of the largest subarea describes a smallest periodicity of the grid structure;
an electronic evaluation unit (14), which is electrically connected to the array electrodes (X1 to Xn, Y1 to Yn) in order, by means of the first array of array electrodes (X1 to Xn, Y1 to Yn), to form an associated electrical measuring field array for the locally resolved detection of a capacitive influence on the detection surface (10);
a handle (3), which is fixed to the detection surface (10) such that it is movable by means of bearing means along an adjustment path that is parallel to the detection surface (10), in order to perform an operating input by means of manually effected movement along the adjustment path, for example by an operator (B) touching the handle (3);
at least one position transmitter (4) moved together with the handle (3) in order, depending on the position, to influence at least one measuring field of the measuring field array capacitively; wherein the position transmitter (4) describes at least one path (12) over the detection surface (10) during the manual adjustment of the handle along the adjustment path; and wherein the electronic evaluation unit (14) is designed to detect the position-dependent influence on the measuring field array caused by the position transmitter (4), in order to obtain and output position information and/or movement information relating to the handle (3),
**characterized in that**
in the projection of the path (12) onto the plane of the grid structure at right angles to the detection surface (10), a smaller subarea (11) of the grid structure located outside the largest subarea and containing the projection of the path (12) is formed in a deviating manner as a result of non-rule-compliant formation of the regular grid structure with the aim that a plurality, preferably most, most preferably all of the junctions (K59) located within the non-rule-compliant subarea (11) are arranged to be offset in the direction of the projection of the path (12) of the position transmitter (4) with respect to the imaginary position, defined by a rule-compliant design, or are contained in a projected area of the path (12).

2. Input device (1) according to the preceding claim, wherein, in the projection of the path (12) onto the plane of the grid structure at right angles to the detection surface (10), a plurality, preferably all, of the junctions (K59) lying within the subarea (11) are arranged within the projection of the path (12) of the position transmitter (4).

3. Input device (1) according to the preceding claim, wherein the junctions (K59) lying within the subarea (11) are arranged to be spaced uniformly from one another over the course of the projection of the path (12) predefined by the adjustment path.

4. Input device (1) according to one of the preceding claims, wherein, for the position-dependent capacitive coupling between the position transmitter and the first array of array electrodes (X1 to Xn, Y1 to Yn), a coupling device (5) arranged to rest on the detection surface (10) and having a first area facing the detection surface (10), on which a second array of coupling electrodes (6a, 6b, 6c) for capacitive coupling with the array electrodes (X1 to Xn, Y1 to Yn) is formed, and having a second area facing the position transmitter (4) and facing away from the detection surface (10), on which a third array of a plurality of contact areas (7a, 7b, 7c) arranged at a distance from one another is formed, wherein the contact areas are arranged such that they can be contacted by touch by the position transmitter (4) selectively and dependent on the position of the handle (3) along the adjustment path; and the coupling device (5) contains a plurality of electrically conductive connections (8a, 8b, 8c), the number of which corresponds at least to the number of contact areas (7a, 7b, 7c) and which are each designed to connect one of the coupling electrodes (6a, 6b, 6c) electrically conductively to a contact area (7a, 7b, 7c).

5. Input device (1) according to one of the preceding claims, wherein a latching device for producing a latching feel and predefining predefined positions along the adjustment path of the handle (3) is provided.

6. Input device (1) according to one of the preceding claims, wherein the coupling device (5) is designed such that the position transmitter (4) is coupled via the coupling device (5) to at least one of the array electrodes of the first array.

7. Use of the input device (1) according to one of the preceding claims in a motor vehicle.

## Revendications

1. Arrangement de saisie (1) possédant :
un dispositif de détection capacitif (2), lequel possède une surface de détection (10) par la formation d'un premier réseau d'électrodes en réseau (X1 à Xn, Y1 à Yn) associé à la surface de détection (10), le premier réseau étant constitué de deux groupes (X, Y) d'électrodes en réseau (X1 à Xn, Y1 à Yn), lesquelles sont disposées en groupes sensiblement parallèlement les unes aux autres, en prédéfinissant ici respectivement une orientation de groupe et en alternance par rapport à leur appartenance à un groupe et, avec une projection imaginaire perpendiculaire, sont disposées en se croisant plusieurs fois sur un plan commun et ici isolées électriquement les unes des autres en formant respectivement un point nodal (K31, K11, K59) aux endroits de leur intersection, une structure en grille régulière avec un positionnement conforme à une règle des points nodaux (K11) étant formée dans une zone partielle de la surface de détection (10), la plus étendue en référence à la surface de détection (10), de sorte que le plus petit écart dans l'orientation de groupe des points nodaux voisins les plus proches de la zone partielle la plus grande décrit respectivement une plus petite périodicité de la structure en grille ;
une unité d'interprétation électronique (14) reliée électriquement aux électrodes en réseau (X1 à Xn, Y1 à Yn) afin de former, au moyen du premier réseau d'électrodes en réseau (X1 à Xn, Y1 à Yn), un réseau de champs de mesure électrique associé destiné à la détection avec résolution spatiale d'une influence capacitive sur la surface de détection (10) ;
une manette (3), qui est fixée mobile sur la surface de détection (10) par le biais d'un moyen support le long d'une course de réglage parallèle à la surface de détection (10) afin d'effectuer une saisie de commande au moyen d'un mouvement provoque manuellement le long de la course de réglage, par exemple en touchant la manette (3) par un opérateur (B) ;
au moins un transmetteur de position (4) qui accompagne le mouvement de la manette (3) afin d'influencer de manière capacitive, en fonction de la position, au moins un champ de mesure du réseau de champs de mesure ; le transmetteur de position (4), lors du positionnement manuel de la manette le long de la course de réglage, décrivant au moins une piste (12) au-dessus de la surface de détection (10) ;
et l'unité d'interprétation électronique (14) étant configurée pour détecter l'influence du réseau de champs de mesure dépendante de la position provoquée au moyen du transmetteur de position (4) afin d'obtenir et de délivrer en sortie une information de position et/ou une information de mouvement de la manette (3),
**caractérisé en ce que**
dans le cas d'une projection perpendiculairement à la surface de détection (10) de la piste (12) sur le plan de la structure en grille, une zone partielle (11) plus petite de la structure en grille, qui se trouve à l'extérieur de la zone partielle plus grande et qui contient la projection de la piste (12), est formée différemment par une configuration non conforme à la règle de la structure en grille régulière avec pour objectif que plusieurs, de préférence la majorité, plus préférablement la totalité des points nodaux (K59) qui se trouvent à l'intérieur de la zone partielle (11) non conforme à la règle sont disposés décalés par rapport à leur position imaginaire, prédéfinie par une conception conforme à la règle dans la direction de la projection de la piste (12) du transmetteur de position (4) ou sont contenus dans une surface projetée de la piste (12).

2. Arrangement de saisie (1) selon la revendication précédente, plusieurs, de préférence la totalité des points nodaux (K59) qui se trouvent à l'intérieur de la zone partielle (11) étant disposés à l'intérieur de la projection de la piste (12) du transmetteur de position (4) dans le cas d'une projection perpendiculairement à la surface de détection (10) de la piste (12) sur le plan de la structure en grille.

3. Arrangement de saisie (1) selon la revendication précédente, les points nodaux (K59) qui se trouvent à l'intérieur de la zone partielle (11) étant disposés avec un écart régulier les uns des autres distribués au-dessus du tracé, prédéfini par la course de réglage, de la projection de la piste (12).

4. Arrangement de saisie (1) selon l'une des revendications précédentes, un dispositif de couplage (5), disposé au repos sur la surface de détection (10), étant configuré avec une première surface faisant face à la surface de détection (10), sur laquelle est formé un deuxième réseau d'électrodes de couplage (6a, 6b, 6c) destiné au couplage capacitif avec les électrodes en réseau (X1 à Xn, Y1 à Yn), et avec une deuxième surface faisant face au transmetteur de position (4) et à l'opposé de la surface de détection (10), sur laquelle est formé un troisième réseau de plusieurs surfaces de contact (7a, 7b, 7c), disposées espacées les unes des autres, en vue du couplage capacitif en fonction de la position entre le transmetteur de position et le premier réseau d'électrodes en réseau (X1 à Xn, Y1 à Yn), les surfaces de contact étant disposées de telle sorte qu'elles sont mises en contact par toucher sélectivement et en fonction de la position de la manette (3) le long de la course de réglage du transmetteur de position (4) ; et le dispositif de couplage (5) comprenant plusieurs liaisons (8a, 8b, 8c) électriquement conductrices, dont le nombre correspond au moins au nombre des surfaces de contact (7a, 7b, 7c) et qui sont configurées pour relier respectivement l'une des électrodes de couplage (6a, 6b, 6c) de manière électriquement conductrice avec une surface de contact (7a, 7b, 7c).

5. Arrangement de saisie (1) selon l'une des revendications précédentes, un dispositif à encliquetage destiné à générer une haptique d'encliquetage et à prédéfinie des positions prédéfinies le long de la course de réglage de la manette (3) étant présent.

6. Arrangement de saisie (1) selon l'une des revendications précédentes, le dispositif de couplage (5) étant configuré de telle sorte que le transmetteur de position (4) est couplé avec au moins l'une des électrodes en réseau du premier réseau par le biais du dispositif de couplage (5).

7. Utilisation d'un arrangement de saisie (1) selon l'une des revendications précédentes dans un véhicule automobile.
